# EUROPÄISCHE PATENTANMELDUNG

(11) **EP 0 707 419 A2**
(43) Veröffentlichungstag der Anmeldung: **17.04.1996**
(21) Anmeldenummer: 95117734.4
(22) Anmeldetag: 10.11.1995
(51) Int. Cl.: H04N 5/225

(54) **Verfahren zur Erzeugung eines Sucherbildes und Standbildkamera**

(71) Anmelder: Sinar AG Schaffhausen, CH-8245 Feuerthalen (CH)
(72) Erfinder: Gfeller, Karl, El.-Ing. HTL, CH-8246 Langwiesen (CH)
(74) Vertreter: Troesch Scheidegger Werner AG

(57) **Zusammenfassung**

Um an einer Standbildkamera, bei der das Standbild optoelektronisch gewandelt wird, das Sucherbild an der Kamera direkt beurteilen zu können, wird der Bildstrahl (S_{B}) aufgeteilt und nach optoelektronischer Wandlung an einem Wandler an einem Sucherbildschirm (6) angezeigt.

## Beschreibung

Die vorliegende Erfindung betrifft ein Verfahren nach dem Oberbegriff von Anspruch 1 sowie eine Standbildkamera nach demjenigen von Anspruch 2.

Es sind Standbildkameras bekannt, bei denen der Bildstrahl, nach dem Objektiv, optisch aufgeteilt wird, wie z.B. mittels eines teildurchlässigen Spiegels, und ein Teil des Bildstrahles am optischen Sucher betrachtet werden kann.

Es sind weiter Standbildkameras bekannt, insbesondere Kameras, bei denen das Standbild optoelektronisch gewandelt wird und elektronisch aufgewertet und aufgezeichnet wird, bei denen die gewandelte Bildinformation über Anschlussleitungen und Videoverstärker auf einen externen Sucherbildmonitor geführt und dort dargestellt werden.

Bei letzterwähnten Kameras ist es nachteilig, dass eine Bedienungsperson der Kamera, bei der Bildwahl und -einstellung, nicht gleichzeitig das Sucherbild beurteilen kann, weil der Monitor nur schwierig aus der Position des Kamerastellers einsehbar ist.

Die vorliegende Erfindung bezweckt diesen Nachteil zu beheben und schlägt hierzu ein Verfahren eingangs genannter Art vor, bei dem der Teil, entsprechend dem Sucherbildstrahl, optoelektronisch gewandelt und an einem Sucherbildschirm an der Kamera angezeigt wird.

Ausgehend von der Standbildkamera eingangs genannter Art, wird die Aufgabe weiter dadurch gelöst, dass daran der Sucherbildstrahl auf eine optoelektronische Wandlereinheit geführt und an einem Sucherbildschirm an der Kamera angezeigt wird.

Eine bevorzugte Ausführungsvariante, der nach dem erfindungsgemässen Verfahren arbeitenden erfindungsgemässen Standbildkamera mit weiteren bevorzugterweise realisierten Merkmalen gemäss den Ansprüchen 3-6 soll anschliessend anhand einer Figur erläutert werden. Diese zeigt schematisch eine erfindungsgemässe Standbildkamera.

Der durch das Kameraobjektiv 1 eintretende Bildstrahl S_{B} wird in einen Sucheranteil S_{S} und einen abzubildenden Teil S_{A} aufgeteilt, beispielsweise mit Hilfe eines teildurchlässigen Spiegels 2. Der abzubildende Strahl S_{A} fällt auf einen optoelektronischen Wandler, beispielsweise auf einen CCD-Wandler 7. Daran wird das optische Bild in elektrische Signale gewandelt, welche (nicht dargestellt) in bekannter Art und Weise weiter verarbeitet und abgespeichert werden. Der Sucherbildstrahl S_{S} wird einem Pentaprisma 3 zugeführt und daran im wesentlichen um 90°, also parallel zum Strahl S_{A}, jedoch nach oben versetzt, umgelenkt. Dieser Strahl S_{S1} wird einem Ablenkprisma 4 zugeführt und dort schiefwinklig, bedienungskonform, beispielsweise bezüglich der Objektivachse um 60°, umgelenkt. Dabei bleibt die Bildlage im Ausgangsstrahl S_{S2} des Ablenkprismas 4 bezüglich der Bildlage im Strahl S_{B} unverändert. Durch ein Sucherobjektiv 5 geführt wird der Strahl S_{S2} optoelektronisch gewandelt, vorzugsweise an einem CCD-Schirm und am Sucherbildschirm 6 angezeigt.

Damit kann eine Kamera-Bedienungsperson unmittelbar am Sucherbildschirm 6, das dem gewandelten Bild an 7 entsprechende Sucherbild, betrachten und beurteilen. Zum Einblenden zusätzlicher Informationen, wie beispielsweise Datum, Uhrzeit, Blende, etc., ist vorzugsweise an der einen Fläche des Pentaprismas 3 eine steuerbare optische Anzeige 9 vorgesehen, wie beispielsweise eine Leuchtdiodenmatrix. Das Bild der optischen Anzeige 9 wird dem Sucherbild am Pentaprisma überlagert und kommt am Sucherbildschirm 6 zur Anzeige. Durch die steuerbare Anzeige 9 wird Information ins Sucherbild am Sucherbildschirm 6 eingekoppelt, die der Bedienungsperson für die Kameraeinstellung nützlich ist, die jedoch nicht ins registrierte Bild eingekoppelt werden soll.

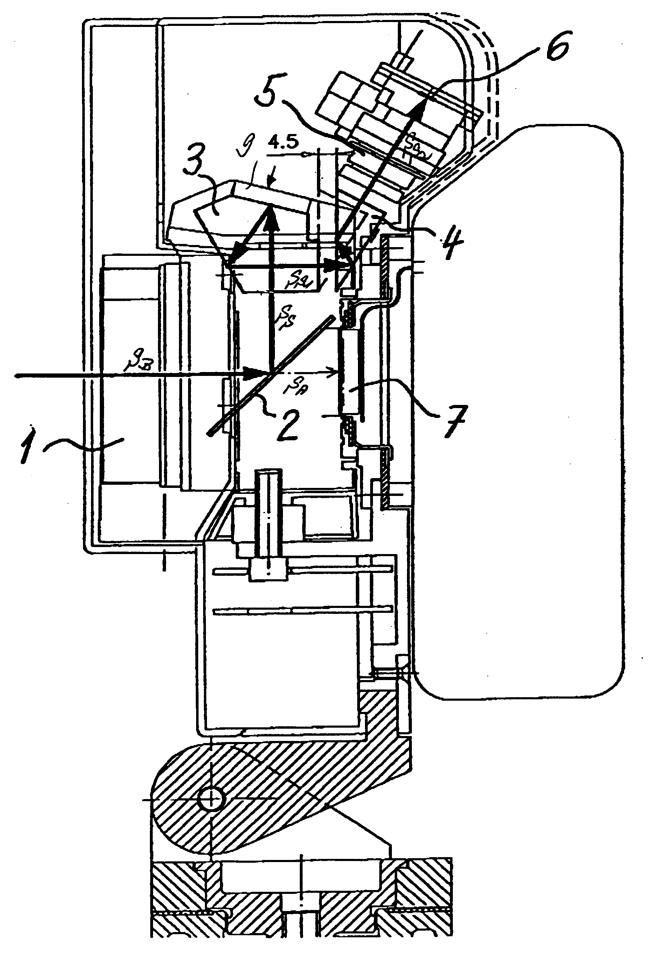

## Patentansprüche

1. Verfahren zur Erzeugung eines Sucherbildes an einer Standbildkamera bei dem, optisch, der Bildstrahl aufgeteilt wird und ein Teil als Sucherbild angezeigt wird, dadurch gekennzeichnet, dass der Teil optoelektronisch gewandelt an einem Sucherbildschirm an der Kamera angezeigt wird.

2. Standbildkamera mit einem dem Objektiv nachgeschalteten Strahlteiler (2), der den optischen Bildstrahl (S_{B}) vom Objektiv (1) in einen Sucherbildstrahl (S_{S}) und in einen Abbildungsstrahl (S_{A}) aufteilt, wobei ersterer einem Betrachtungsfenster zugeleitet wird, dadurch gekennzeichnet, dass der Sucherbildstrahl (S_{S}) auf eine optoelektronische Wandlereinheit geführt und elektronisch an einem Sucherbildschirm (6) an der Kamera angezeigt wird.

3. Standbildkamera nach Anspruch 2, dadurch gekennzeichnet, dass im Bereiche des Sucherbildstrahlenganges eine steuerbare optische Anzeige (9) vorgesehen ist und eine Ueberlagerungsoptik (3) das Bild der steuerbaren optischen Anzeige (9) und dasjenige des Sucherbildstrahles (S_{S}) überlagert.

4. Standbildkamera nach einem der Ansprüche 2 oder 3, dadurch gekennzeichnet, dass im Sucherbildstrahlengang, dem Teiler (2) nachgeschaltet, ein Pentaprisma (3) mit Dachkante nachgeschaltet ist, letzterem ein Ablenkprisma (4) und letzterem eine CCD-Wandleranordnung.

5. Standbildkamera nach Anspruch 3 und 4, dadurch gekennzeichnet, dass die steuerbare optische Anzeige (9) im Bereiche des Pentaprismas (3) angeordnet ist und daran die Ueberlagerung erfolgt.

6. Standbildkamera nach einem der Ansprüche 2-5, dadurch gekennzeichnet, dass eine Steckerverbindung vorgesehen ist zum Abgriff der gewandelten Sucherbildsignale.
